Europäisches Patentamt

European Patent Office

Office européen des brevets

(19)

(11) Veröffentlichungsnummer: **0 175 869**
**B1**

(12) **EUROPÄISCHE PATENTSCHRIFT**

(45) Veröffentlichungstag der Patentschrift:
**21.09.88**

(21) Anmeldenummer: **85109014.2**

(22) Anmeldetag: **19.07.85**

(51) Int. Cl.⁴: **B 65 G 13/071**

(54) **Staurollenbahn.**

(30) Priorität: **17.09.84 DE 3434092**
**21.06.85 DE 3522177**

(43) Veröffentlichungstag der Anmeldung:
**02.04.86 Patentblatt 86/14**

(45) Bekanntmachung des Hinweises auf die Patenterteilung:
**21.09.88 Patentblatt 88/38**

(84) Benannte Vertragsstaaten:
**AT BE CH FR GB IT LI NL SE**

(56) Entgegenhaltungen:
**DE-B-2 133 275**
**FR-A-2 462 365**
**US-A-3 253 697**

(73) Patentinhaber: **MANNESMANN Aktiengesellschaft, Mannesmannufer 2 Postfach 5501, D-4000 Düsseldorf 1 (DE)**

(72) Erfinder: **Duttiné, Walter, Karl- Nahrgang- Weg 10, D-6050 Offenbach (DE)**
Erfinder: **Reckemeier, Hartwig, Schäfergasse 24, D-6457 Maintal 2 (DE)**
Erfinder: **Bonifer, Edgar, Steinstrasse 15, D-6115 Münster (DE)**

(74) Vertreter: **Meissner, Peter E., Dipl.- Ing., Herbertstrasse 22, D-1000 Berlin 33 (DE)**

EP 0 175 869 B1

## Beschreibung

Die Erfindung betrifft eine Staurollenbahn nach dem Oberbegriff des Hauptanspruchs, wie sie durch die FR-A-2 462 365 bekannt ist. Diese hat den Nachteil, daß das zu stauende Fördergut auf einen bereits abgeschalteten Stauplatz undefiniert aufläuft, wobei es je nach der kinetischen Energie und dem Reibwiderstand entweder über diesen Stauplatz hinausrollt und das dahinter stehende, bereits gestaute Fördergut weiterschiebt oder schon so früh zum Anhalten kommt, daß es noch in den bereits überfahrenen Stauplatz hineinragt. Bei diesem undefinierten Anhalten ist die Betätigung des zum Stauen erforderlichen Schaltlineals nicht gewährleistet. Auch ist das zum Schalten erforderliche Drehen der Schaltrolle nicht gewährleistet, da deren Schwerpunkt neben der Drehachse liegt und daher nur ein kleines Drehmoment auf die Schaltrolle ausübt. Dieses Drehmoment ist aber oftmals zum Drehen der Schaltrolle zu gering, z. B. wenn diese verdreckt oder schlecht geschmiert ist.

Die Staurollenbahn nach dem US-Patent 3 253 697 hat abgeflachte Gurttragrollen, über die der Gurt bei der antriebsfreien abgesenkten Stellung gleitet. Dabei entstehen ungewollte Energieverluste, Pfeifgeräusche sowie Schäden am Antriebsgurt. Auch ist zum Ändern der Schaltstellung ein großer Kraftaufwand am Schaltheben erforderlich.

Bei allgemein bekannten Staurollenbahnen, z. B. nach der DE-AS-2 315 862, muß das Fördergut über den Schalthebel die Kraft von Federn überwinden, die so stark sind, daß sie einen ausreichenden Druck auf die heb- und senkbären Gurtrollen auslösen. Derartige Staurollenbahnen sind nur bei annähernd gleichem Fördergutgewicht einsetzbar und daher in vielen Fällen nicht verwendbar.

Aufgabe der Erfindung ist es daher, eine Staurollenbahn mit den Merkmalen des Oberbegriffs des Hauptanspruches so zu gestalten, daß das Anhalten des zu stauenden Fördergutes auf dem vorbestimmten Stauplatz mit Sicherheit erfolgt und daß auch nach dem Stauen das Weiterfördern des Fördergutes gesichert ist. Diese Aufgabe wird durch die Merkmale im kennzeichnenden Teil des Hauptanspruches gelöst. Da die Gurtrolle die Schaltrolle an den sich gegenüberliegenden Bereichen durchdringt, erfährt die Schaltrolle zum Schalten eine 180°-Drehung, wobei die exzentrische Lagerung der Gurtrolle zum Heben und Senken des Antriebsgurtes genutzt wird. Der erfindungsgemäße Kraftspeicher bewirkt nach Freigabe der Steueranschläge durch den Schaltnocken das sichere Verschieben des Schaltlineals und leitet die Drehbewegung der Schaltrolle ein, die nach der ersten Drehbewegung von dem an dem Mantelsegment der Schaltrolle anliegenden Antriebsgurt mitgenommen wird, bis die Schaltrolle nach der 180°-Drehung von ihren Schaltnocken gebremst wird, die dann wieder an einem der Steueranschläge des Schaltlineals anliegt.

Die Schaltrolle hat in weiterer Ausgestaltung der Erfindung eine konzentrische Bohrung für eine Achse und einen dazu exzentrischen Lagerring und zu diesem eine konzentrische Bohrung für die Gurtrolle, die durch eine kreisbogenförmige Durchdringung des Mantels der Schaltrolle ragt, die auf der der Durchdringung gegenüberliegenden Seite eine Aussparung für die Gurtrolle hat, wobei die Durchdringung und die Aussparung einen Winkel von ca. 30 bis 35° des Schaltrollenumfanges umfassen und der Mantel am Übergang zu der Schaltrolle abgerundet ist.

Da ein über zwei Stauplätze reichendes Schaltlineal, je nach Fördergut und Stauplatzlänge, eine Länge von mehreren Metern haben muß, wird es für die Lagerhaltung, Transport und Montage unhandlich und könnte verbiegen oder gar knicken. Um dies zu verhindern, ist es mehrteilig ausgebildet.

Auch kann das Schaltlineal eines Stauplatzes aus mehreren gleichen Teilen zusammengesetzt werden. Man benötigt dann nur wenige Standardlängen, die durch unterschiedliches Aneinanderfügen jeder gewünschten Stauplatzlänge entspricht. Schaltlineal und Linealverlängerung sind über einen Anschlußschlitz des einen Teils für einen Anschlußwinkel des anderen Teils miteinander verbunden und durch einen übergeschobenen Klemmnoppen in ihrer Lage zueinander gesichert.

Das Schaltlineal und die Linealverlängerung sind mit durch Rollenschlitze geführten Achsen an einem Elemententräger befestigt, der an einer Seitenwange der Staurollenbahn angeordnet ist. Das Schaltlineal hat oberhalb und unterhalb der Schlitze zur Verschieberichtung gerichtete Antippnasen, die die Drehung der Schaltrollen über deren Antippanschläge einleiten. Außerdem haben das Schaltlineal und die Linealverlängerung in Verlängerung der Rollenschlitze etwa senkrecht zu diesen angeordnete Abschaltanschläge und Einschaltanschläge. Alle Anschläge sind durch Abkantungen der Blechstreifen-Lineale erzielte Vorsprünge, die mit geringem Aufwand herstellbar sind. Schaltlineal und Linealverlängerung haben Montageschlitze für Querträger, die die Seitenwangen miteinander verbinden.

Die Rollenachse ist in einem an der Seitenwange befestigten Elemententräger gelagert, der als L-Profil ausgebildet ist und auf dem waagerechten unteren Schenkel den Rücklauftrum des Antriebsgurtes unterstützt.

Die Schaltleiste ist in weiterer Ausgestaltung der Erfindung über einen zweiarmigen Hebel mit einer Bohrung auf der Achse der Tragrolle gelagert und über eine Längenausgleichverbindung in Form einer Schaltkurve für einen Gleitzapfen mit einem Zwischenhebel verbunden, der mit einem Kippzapfen in einer Zapfenbohrung der Linealverlängerung gelagert ist und unterhalb des Kippzapfens eine Einhängebohrung für eine Ausgleichfeder des Kraftspeichers hat, die als Zugfeder ausgebildet ist. Diese ist gegenüber der heruntergedrückten Schaltleiste in eine Federanschlußbohrung im Untergurt des Elemententrägers eingehängt. Dieser Ausgleichfeder ist eine Rückzugfeder des Kraftspeichers entgegengerichtet, die zwischen einem Federanschlußauge der Linealverlängerung oder auch etwa des Schaltlineals und einer weiteren Anschlußbohrung des Elemententrägers angeordnet ist. Zum Variieren der Federvorspannung sind mehrere Federanschlußbohrungen hintereinander angeordnet. Die Schwenkbewegung des Zwischenhebels wird beim Einschwenken der Schaltleiste in den Förderweg von einer unteren Abdrückfläche begrenzt, die an einem aus dem Untergurt heraus abgewinkelten Anschlag des Elemententrägers anliegt.

Zum Erhöhen der Anhaltegenauigkeit des auslaufenden Fördergutes können eine oder mehrere der Schaltrollen gegenüber dem exzentrischen Lagerring einen Exzenterzapfen für eine Bremse haben. Diese kann über einen drehbaren Exzenterring auf dem Exzenterzapfen gelagert sein. Die Bremse ist vorzugsweise dort angeordnet, wo das Fördergut mit seiner Vorderkante zum Stehen kommen soll. Die dort vorhandenen Tragrollen können zum Erhöhen des Reibwiderstandes zwischen Tragrolle und Fördergut mit einer bremsenden Oberfläche versehen sein.

Die Verlängerung des Schaltlineals kann bei einer anderen Bauweise an seinem in Förderrichtung liegenden Ende eine Sperrnase für einen dahintergreifenden Riegelfinger der in die Förderbahn vorstehenden Schaltleiste haben, die von einer Schaltfeder in den Förderweg beaufschlagt ist, wobei sich die Schaltfeder mit einer Gleitnase auf einer in Förderrichtung ansteigenden Gleitkurve des in Förderrichtung anschließenden Schaltlineals abstützt. Bei einer Axialverschiebung des in Förderrichtung liegenden Schaltlineals entgegen der Förderrichtung hebt die Gleitkurve das Gleitende der Schaltfeder, die als Blattfeder ausgebildet ist und die Drehachse des Schalthebels in einem Winkel von ca. 270° umschließt und dort an einem Federzapfen des Schaltlineals mit einer angebogenen Öse angreift. Die Ausgleichfeder und Rückzugfeder sind einerseits über Haltezapfen mit der Linealverlängerung verbunden und greifen andererseits an einem exzentrischen Federzapfen der am Elemententräger gelagerten Schaltrolle an.

In weiterer Ausgestaltung der Erfindung hat die vom Antriebsgurt drehbare Schaltrolle eine Ausnehmung mit einem Federhalten für eine Antippfeder, die sich an einem auf der Achse der Schaltrolle befestigten Federnocken in Drehrichtung der Schaltrolle abstützt, deren Schaltnocken an einem der Steueranschläge des Schaltlineals anliegt.

Die in der Schaltrolle angeordnete Antippfeder ist klein und preiswert und wirkt nach beiden Richtungen, also sowohl zum Verdrehen der Schaltrolle zum Stauen als auch zum anschließen Drehen zum Fördern. Die Antippfeder übt bei Ruhestellung der Schaltrolle immer ein Kippmoment auf diese aus, die dann vom Antriebsgurt nach Freigabe der Schaltnocken durch die Schaltanschläge des Schaltlineals um 180° gedreht wird. Bedingt durch die Abschaltlogik wird nur im Staufall, d. h., wenn der vorausgehende Stauplatz besetzt ist bzw. dessen Schaltleiste gedrückt ist am Schaltlineal und an der Schaltrolle der Abschaltvorgang ausgelöst. Das bedeutet, daß Betätigungsgeräusche der Schaltrolle am Schaltlineal nur im Staufall entstehen. Zudem werden die Schaltspiele und damit Verschleiß an den betreffenden Bauteilen gemindert.

Die Antippfeder ist in weiterer Ausgestaltung der Erfindung eine etwa U-förmig gebogene einfache Blattfeder, deren Mittelsteg zwischen dem Federhalter und der Ausnehmung gehalten ist und die mit ihren Schenkeln unter Vorspannung an dem Federnocken anliegt, wobei die Ausnehmung mindestens so breit ist, wie der Federnocken zuzüglich der Dicke der Schenkel der Antippfeder. Der exzentrische Lagerring der Schaltrolle liegt bei gehobener Gurtrolle in Zugrichtung des Antriebsgurtes hinter der Bohrung der Schaltrolle für deren Achse. Beim Ausschalten des Antriebes, d. h. beim Absenken der Schaltrolle reicht dieses Hilfsdrehmoment aufgrund der hohen an der Gurtrolle wirkenden Einschnürkraft des Antriebgurtes und des daraus resultierenden Reibverlustes nicht aus. Deshalb kommt durch diese Lagerung ein zweiter Hilfsimpuls zum Tragen, und zwar ein Drehmoment aus Einschnürkraft x dem seitlichen, waagerechten Abstand der Gurtrollendrehachse zur Schaltrollendrehachse.

In weiterer Ausgestaltung der Erfindung ist die Rückzugfeder über eine Einhängebohrung eines Zwischenstückes mit dem Schaltlineal verbunden und das Zwischenstück hat einen Gleitzapfen, an dem eine Schaltkurve des Hebels der Schaltleiste anliegt, die eine über die Breite der Förderbahn reichende Achse mit darauf abwechselnd angeordneten Rollelementen und Dämpfungselementen hat, wobei die Rollelemente bei in Überfahrt verschwenkter Schaltleiste über die Dämpfungselemente hinausragen. Die auf der Achse pendelnd gelagerten Dämpfungselemente haben dem Mantel der Tragrolle angepaßte Stützlippen. Die Dämpfungselemente sind so ausgebildet, daß beim Auftreffen des Fördergutes auf die Schaltleiste der Erstanschlag von den Dämpfungselementen aufgefangen wird und nicht von den relativ harten Rollelementen. Ferner wird durch den Druck des Fördergutes die Stützlippe auf die Tragrolle gedrückt, wobei durch die noch angetriebene Tragrolle auf das Dämpfungselement und somit auf die Schaltleiste eine Mitnahmekraft wirkt, die die Schalt- bzw. Drehbewegung der Schaltleiste auch beim Auftreffen eines leichten Fördergutes unterstützt. Weiterhin wird durch die Form des Dämpfungs-elementes, speziell durch den überhöhten Elementenrücken der Schlag der Schaltleiste gegen die davor liegende Tragrolle gedämpft. Nach erfolgter Betätigung der Schaltleiste rollt das Fördergut auf den verschleißfesten und gleitfreudigen Rollelementen ab, dessen Außenkonturen die Elementabflachungen überragen. Damit wird die geschaltete bzw. gedrückte Schaltleiste nicht zur Bremsleiste. Dies ist vor allem bei leichten Fördergütern zum Vorteil, die sonst beim Durchfördern an den Schaltleisten hängen bleiben könnten.

In weiterer Ausgestaltung der Erfindung ist auf der Achse einer oder mehrerer Schaltrollen gegenüber deren exzentrischem Lagerring ein Exzenterzapfen für eine Rolle vorhanden, die in angehobenem Zustand einen in seiner Längsrichtung festgelegten Bremsgurt von unten gegen die versetzt darüber liegenden Tragrollen drückt. Die 180° Drehbewegung an der Schaltrolle zum Absenken oder Anheben des Antriebsgurtes über die Gurtrolle wird durch die Bremsrolle im umgekehrten Sinn genutzt. Beim Absenken der Gurtrolle wird die Bremsrolle über den Exzenterzapfen angehoben und der Bremsgurt zwischen je zwei Tragrollen zur Einschnürung gebracht. Durch die entstehende Reibung zwischen Bremsgurt und Tragrolle sowie zwischen Tragrolle und Fördergut wird die kinetische Energie des Fördergutes und der Tragrollen bis zum Stillstand abgebaut. Wenn ein Stauplatz anläuft, wird die Gurtrolle angehoben und die Bremsrolle gesenkt, d. h., der Antriebsgurt bekommt Kontakt zu den Tragrollen, deren Kontakt zu dem Bremsgurt gelöst wird. Genau wie beim Ausschalten, d. h., wie beim Absenken der Schaltrolle mit der Gurtrolle reicht das Hilfsmoment der Antippfeder nicht aus. Auch hier wirkt eine Einschnürkraft, und zwar die vom Bremsgurt auf die Bremsrolle und auch hier muß ein zweiter Hilfsdrehimpuls zum Tragen kommen, nämlich das Drehmoment aus Einschnürkraft x dem seitlichen, waagerechten Abstand der Bremsrollen-Drehachse zur Drehachse des Bremsexzenters.

Mehrere Ausführungsbeispiele der Erfindung sind in den Zeichnungen dargestellt und im folgenden erläutert. Es zeigen:

Fig. 1 - 4      Ausschnitte aus einer Rollenförderbahn in verschiedenen Staupositionen,

Fig. 5      einen Ausschnitt durch einen Längsschnitt der Förderbahn nach Fig. 1 in größerem Maßstab,

Fig. 6      die Draufsicht auf Fig. 5,

Fig. 7      eine Linealverlängerung in der Seitenansicht,

Fig. 8      eine Draufsicht auf Fig. 7,

Fig. 9      ein Schaltlineal in der Seitenansicht,

Fig. 10      eine Draufsicht auf Fig. 9,

Fig. 11      einen Ausschnitt aus Fig. 5 in größerem Maßstab,

Fig. 12      die Draufsicht auf Fig. 11,

Fig. 13      den Schnitt XIII-XIII durch die Fig. 11,

Fig. 14      den Schnitt XIV-XIV durch die Fig. 11,

Fig. 15      einen Längsschnitt durch eine Schaltrolle mit Gurtrolle,

Fig. 16      die Ansicht A von der Fig. 15,

Fig. 17      die Ansicht von der Fig. 15

Fig. 18      die Draufsicht auf Fig. 15,

Fig. 19      die Lage der Schaltrolle beim abgesenkten Antriebsgurt,

Fig. 20      die Lage des Schaltlineals beim abgesenkten Gurt nach Fig. 19,

Fig. 21      die Lage der Schaltrolle beim Antreiben der Tragrollen,

Fig. 22      die Lage des Schaltlineals beim Antreiben der Schaltrolle nach Fig. 21,

Fig. 23      einen Zwischenhebel in der Vorderansicht,

Fig. 24      die Seitenansicht von Fig. 23,

Fig. 25      die Bremse aus Fig. 1 in größerem Maßstab,

Fig. 26      einen Ausschnitt aus einer anderen Förderbahn im größeren Maßstab,

Fig. 27      einen Längsschnitt durch Fig. 26.

Fig. 28      einen Ausschnitt durch einen Längsschnitt einer anderen Förderbahn in größerem Maßstab,

Fig. 29      die Draufsicht auf Fig. 28,

Fig. 30      eine Linealverlängerung in der Seitenansicht,

Fig. 31      eine Draufsicht auf Fig. 30,

Fig. 32      ein Schaltlineal in der Seitenansicht,

Fig. 33      eine Draufsicht auf Fig. 32,

Fig. 34      einen Ausschnitt aus Fig. 28 in größerem Maßstab,

Fig. 35      die Draufsicht auf Fig. 34,

Fig. 36      den Schnitt XXXVI-XXXVI durch die Fig. 34,

Fig. 37      den Schnitt XXXVII-XXXVII durch die Fig. 34,

Fig. 38      einen Längsschnitt durch eine Schaltrolle mit Gurtrolle,

Fig. 39      die Ansicht A von der Fig. 38,

Fig. 40      die Ansicht B von der Fig. 38,

Fig. 41      die Draufsicht auf Fig. 38,

Fig. 42      die Lage der Schaltrolle beim abgesenkten Antriebsgurt,

Fig. 43      die Lage des Schaltlineals beim abgesenkten Gurt nach Fig. 42,

Fig. 44      die Lage der Schaltrolle beim Antreiben der Tragrollen,

Fig. 45      die Lage des Schaltlineals beim Antreiben der Schaltrolle nach Fig. 44,

Fig. 46      ein Zwischenstück in der Vorderansicht,

Fig. 47      die Seitenansicht von Fig. 46.

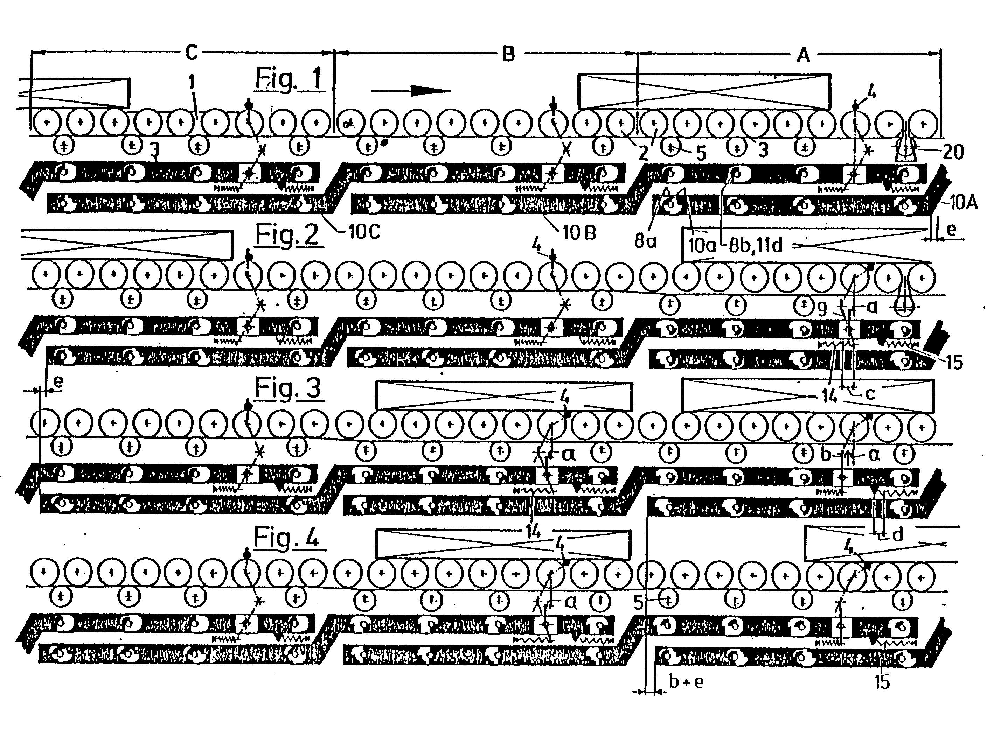

Bei der Lage nach Fig. 1 ragen alle Schaltleisten 4 über die Tragrollen 2 hinaus, die auf den Stauplätzen A, B und C von dem Antriebsgurt 3 angetrieben werden. Dieser wird von den Gurtrollen 5 in angehobener Stellung an den Tragrollen 2 entlanggeführt. Die Schaltlineale 10A, 10B und 10C reichen über zwei aneinander anschließende Stauplätze und liegen nebeneinander. Da die Funktion bei richtiger Darstellung schwer zu erklären ist, sind die Schaltlineale abgekröpft übereinander gezeichnet.

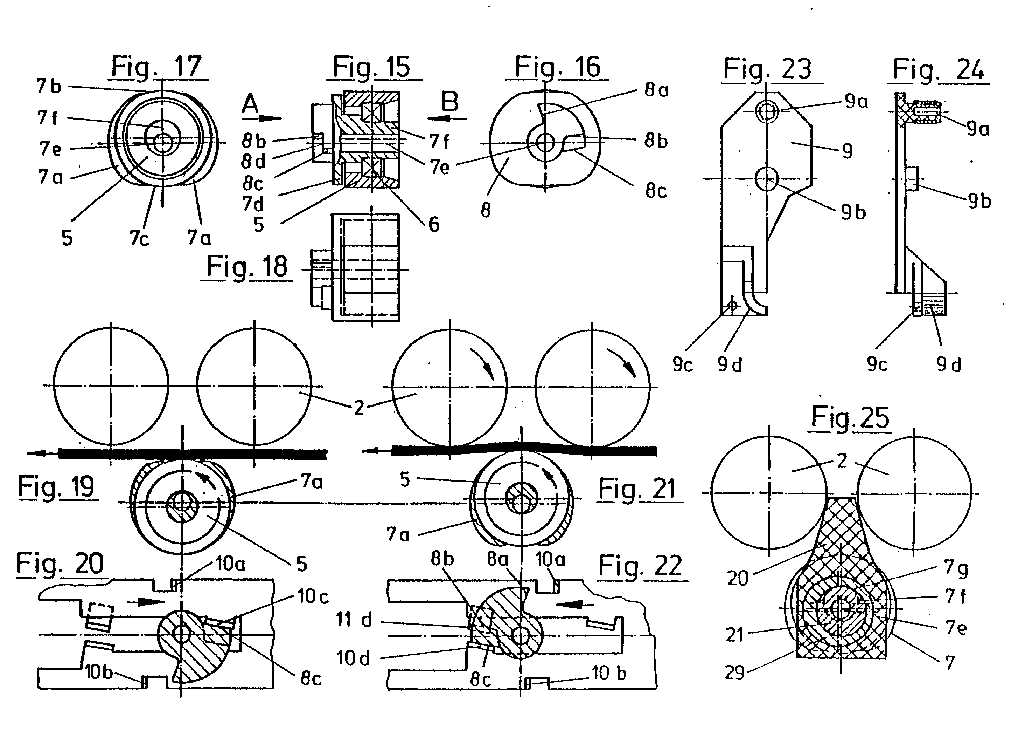

Der Stauplatz A liegt vor dem Ende der Förderbahn, und sein Schaltlineal 10A wurde von einem nicht gezeichneten Elektromagneten in Vorbereitungsstellung gebracht, d. h. es hat einen Hub e von ca. 8 mm ausgeführt. Das Schaltlineal 10A hat etwa die Hälfte des gesamten Schalthubes verrichtet und liegt mit der Antippnase 10a am Antippanschlag 8a der Schaltrolle 7 an, wie es nach dem Verschieben des Schaltlineals 10 entsprechend Fig. 22 sein wird, wobei die Gurtrolle 5 den Antriebsgurt zwischen den Tragrollen 2 hochdrückt, wie auch Fig. 21 zeigt.

Der erwähnte Hub e kann auch dadurch zustandekommen, daß an einem dem Stauplatz A vorgelagerten Stauplatz eine Schaltleiste von einem Fördergut heruntergedrückt wurde. Der Stauplatz A wurde durch diesen Hub e noch nicht abgeschaltet, da der Schaltanschlag 8b noch am Einschaltanschlag 11d der Linealverlängerung 11 des Schaltlineals 10B anliegt, welches damit neben dem Schaltlineal 10A den Stauplatz A überdeckt.

Bei der Schaltsituation nach Fig. 2 hat ein Fördergut die Schaltleiste 4 am Stauplatz A heruntergedrückt und über den Zwischenhebel 9 den Leerhub a bewirkt, wobei die am unteren Ende des Zwischenhebels 9 angreifende Ausgleichfeder 14 um das Maß c gespannt wird.

Dieser Leerhub a genügt, um alle im Stauplatz A befindlichen Anschläge 8 der Schaltrollen 7 zur Freigabe vorzubereiten. Durch einen zusätzlichen Antipphub b erfolgt die volle Freigabe, so daß die Schaltrollen 7 um 180° gedreht und dabei die exzentrisch darin gelagerten Gurtrollen gesenkt werden, so daß der Antriebsgurt 3 nicht mehr an den Tragrollen 2 des Stauplatzes A anliegt, wie Fig. 19 zeigt. Der Antipphub b gab der Schaltrolle 7 einen Drehimpuls, bei dem die Zungenspitze des Mantelsegmentes 7a in den Gleitbereich des Antriebsgurtes 3 gelangte, der mit seiner Zugkraft nach dem Freigeben der Schaltanschläge 8b und 8c das weitere Drehen der Schaltrolle 7 erzwingt.

Die Drehung der Schaltrollen 7 wurde ermöglicht, weil die Schaltanschläge 8b und 8c von den Einschaltanschlägen 10d und 11d der Schaltlineale 10A und 10B durch deren Axialverschiebung freigegeben wurden. Durch die Axialbewegung des Schaltlineals 10B erfolgt eine Schaltvorbereitung im Stauplatz B. Die Antippnase 10a des Schaltlineals 10B drückt gegen den Antippanschlag 8a des Schaltnockens 8. Da der Antipphub b erst bei Betätigung der Schaltleiste 4 im Stauplatz B erfolgt, muß am Zwischenhebel 9 und der Ausgleichfeder 14 ein Ausgleich stattfinden. Die Ausgleichfeder 14 wird um den Federweg c gespannt. Die hierdurch gespeicherte Energie wird später beim Verrichten des Antipphubes b wieder frei und wird umgesetzt in eine Antippenergie und eine Spannenergie für die Rückzugfeder 15.

Bei der Situation nach Fig. 3 hat das Fördergut die Schaltleiste 4 des Stauplatzes B betätigt und den Antriebsgurt 3 durch Absenken der Gurtrollen 5 von den Tragrollen 2 gelöst. Das Schaltlineal 10C hat einen Hub e ausgeführt, der genügte, um alle im Stauplatz B befindlichen Schaltnocken 8 freizugeben. Das Schaltlineal 10B übt wegen der freiwerdenden Energie der Ausgleichfeder 14 den Antipphub b aus. Gleichzeitig wird mit einem Teil dieser Energie die Rückzugfeder 15 des Stauplatzes A gespannt, um später beim Wiedereinschalten als Antippenergie zur Verfügung zu stehen. Das Schaltlineal 10B verursachte mit der Antippnase 10a eine 180°-Drehung des Schaltnockens 8 mit der Schaltrolle 7, wobei die exzentrisch darin gelagerte Gurtrolle 5 abgesenkt wird. Gleichzeitig erfolgt durch die Axialverschiebung um den Hub e des Schaltlineals 10C eine Schaltvorbereitung für den Stauplatz C, wobei die Ausgleichsfeder 14 des Stauplatzes B gespannt und der Zwischenhebel 9 verschwenkt wird.

Bei der Situation nach Fig. 4 wurde die Sperre des Stauplatzes A aufgehoben. Das Schaltlineal 10A wurde von einem Einschaltmagneten um den Einschalthub in Förderrichtung verschoben. Dieser Einschalthub ist die Summe der Schalthübe a und b aus Fig. 3 und bewirkt über das Antippen der Einschalt-Antippnase 10b des Schaltlineals 10A am Antippanschlag 8a des Schaltnockens 8 eine 180°-Drehung der Schaltrolle 7 mit der darin exzentrisch gelagerten Gurtrolle 5, die den Antriebsgurt 3 gegen die Tragrollen 2 preßt. Die Drehbewegung des Schaltnockens 8 wird begrenzt durch das Anliegen des Schaltanschlages 8c an den Einschaltanschlag 10d des Schaltlineals 10A. Die Drehung wird durch den Zug des Antriebsgurtes 3 am Mantelsegment 7a der Schaltrolle 7 unterstützt.

Wenn die Hinterkante des Fördergutes den Stauplatz A verlassen hat, zieht die Rückzugfeder 15 des Stauplatzes A das Schaltlineal 10B um den Hub d in Förderrichtung und bewirkt dabei das Hochschwenken der Schaltleiste 4 in den Förderweg. Bei dieser Axialverschiebung geben die Antippnasen 10b des Schaltlineals 10B den Schaltnocken 8 über ihre Antippanschläge 8a einen Drehimpuls, bei dem die in den Schaltrollen 7 exzentrisch gelagerten Gurtrollen 5 angehoben werden und den Antriebsgurt 3 gegen die Tragrollen 2 drückt, die das darauf befindliche Fördergut weiterfördern. Der Hub d bewirkt ferner auch im Bereich des Stauplatzes B, daß die Einschaltanschläge 10d des Schaltlineals 10B über die Schaltanschläge 8c die Drehbewegung der Schaltnocken 8 und damit der Schaltrollen 7 begrenzen. Wenn die

Hinterkante des Fördergutes die Schaltleiste 4 am Stauplatz B verlassen hat, entspannt sich die Ausgleichsfeder 14 am Stauplatz B und das Schaltlineal 10C macht einen Rückwärts-Leerhub und beendet damit die Vorbereitungsstellung im Stauplatz C. Hierbei wird die Rückzugfeder 15 am Stauplatz B um den Hub dentspannt.

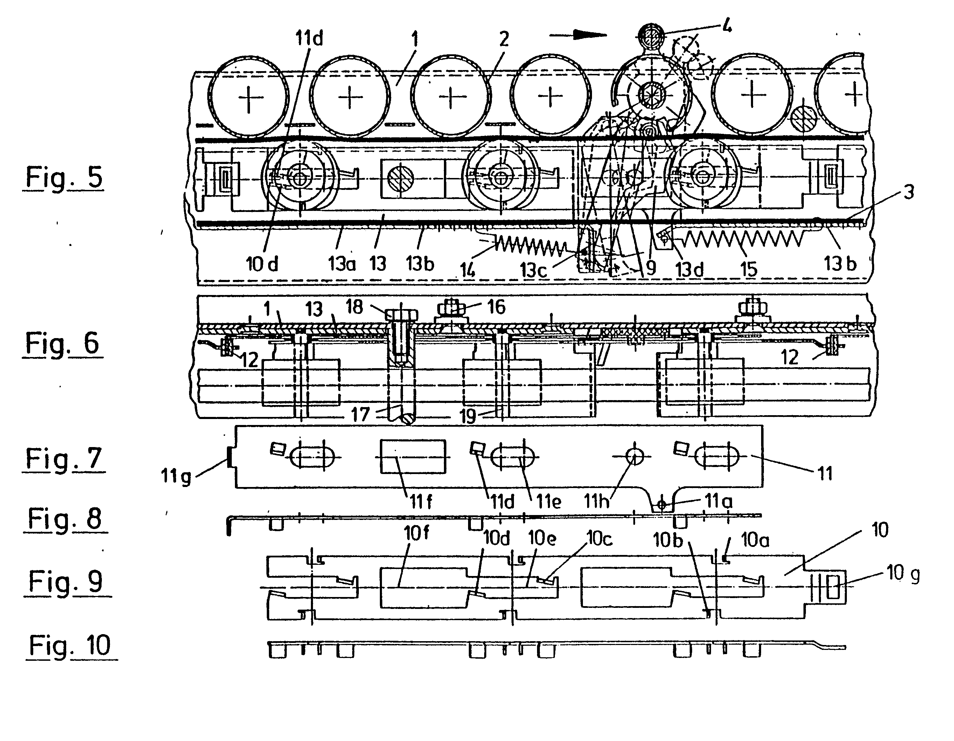

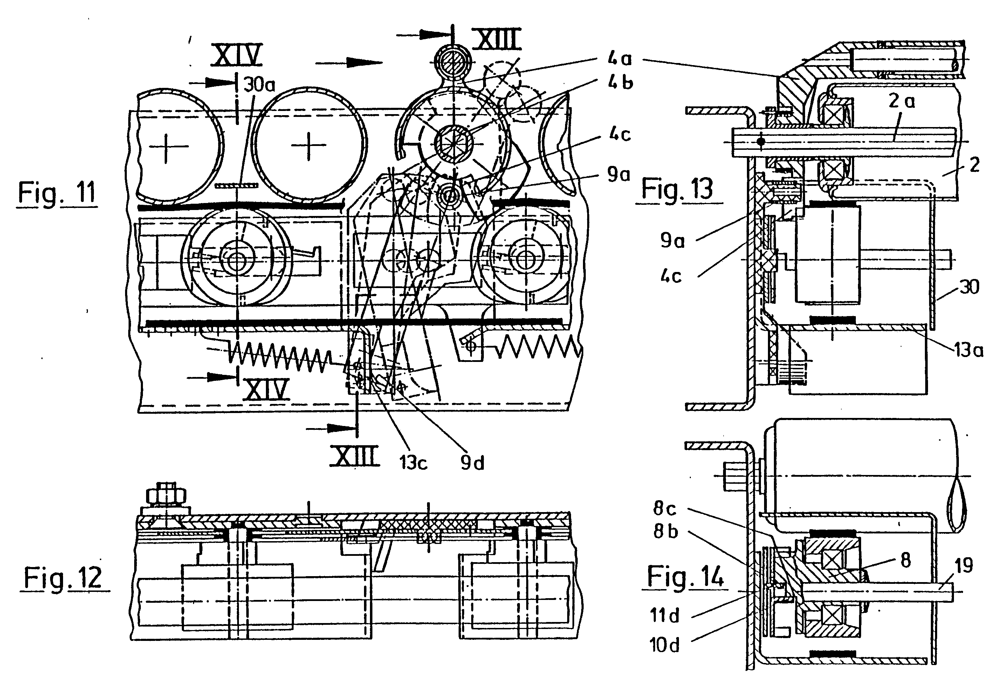

Die Fig. 5 zeigt einen Ausschnitt aus einer Förderbahn, und die Fig. 6 zeigt einen Längsschnitt durch die Seitenwange mit den Schaltelementen in der Draufsicht. Vergrößerungen aus den Fig. 5 und 6 sowie Querschnitte dadurch sind in den Fig. 11 bis 14 dargestellt. Zwischen den Seitenwangen 1 sind Tragrollen 2 gelagert, von denen an jedem Stauplatz eine mit einer Schaltleiste 4 versehen ist. Die Schaltleiste 4 ist als zweiarmiger Hebel 4a ausgebildet und mit einer Bohrung 4b auf der Achse 2a der Tragrolle 2 gelagert und hat auf dem der Leiste gegenüberliegenden Ende eine Schaltkurve 4c (s. Fig. 11) für einen Gleitzapfen 9a eines Zwischenhebels 9, der in den Fig. 23 und 24 besonders gezeichnet ist und mit einem Kippzapfen 9b in einer Zapfenbohrung 11h einer Linealverlängerung 11 gelagert ist (s. Fig. 7). Der Zwischenhebel 9 hat am unteren Ende eine Einhängebohrung 9c für die Ausgleichfeder 14 und eine gewölbte Abdruckfläche 9d, mit der er bei gehobener Schaltleiste 4 an einem Anschlag 13c eines Elemententrägers 13 anliegt. Dieser Elemententräger 13 ist, wie die Fig. 6 zeigt, mit Senkschrauben 16 an der Seitenwange 1 befestigt und trägt Achsen 19 für die Schaltrollen 7. Die Seitenwangen 1 einer Förderbahn sind über zwischen diesen angeordneten Querträgern 17 und Schrauben 18 miteinander verbunden.

Der Elemententräger 13 ist ein L-Profil und hat im unteren waagerechten Schenkel 13a Federanschlußbohrungen 13b für die Ausgleichfeder 14 und die Rückzugfeder 15. Der Schenkel 13a dient ferner als gleitende Auflage für den Untertrum des Antriebsgurtes 3, wie Fig. 13 zeigt und hat für diesen an dem Ende eine Aufgleitnase 13d (s. Fig. 5).

Fig. 13 zeigt auch die Abdeckung des Antriebsgurtes 3 und der Schaltrollen 7 durch ein Winkelprofil 30, dessen oberer Flansch 30a abschnittsweise zwischen den Tragrollen 2 liegt (s. Fig. 11).

Die in Fig. 7 gezeichnete Linealverlängerung 11 ist mit einem Rollenschlitz 11e, und das in Fig. 9 gezeichnete Schaltlineal 10 ist mit einem Rollenschlitz 10e auf der Achse 19 geführt, wie in den Fig. 6 und 14 zu sehen ist. Die wirksame Länge eines Schaltlineals 10 erstreckt sich zusammen mit einer Linealverlängerung 11 oder mehreren Linealverlängerungen über zwei aneinander anschließende Stauplätze, wie die Fig. 1 bis 4 zeigen. Sie liegen jedoch nicht abgekröpft übereinander nach den Fig. 1 bis 4, sondern flach aufeinander nach den Fig. 6, 12 und 14. Das Schaltlineal 10 hat an einem Ende eine Abkröpfung mit einem Anschlußschlitz 10g für einen Anschlußwinkel 11g der Linealverlängerung 11. Die Verbindung ist durch einen über den Anschlußwinkel 11g geschobenen Klemmnoppen 12 gesichert. Die Linealverlängerung hat außerdem ein Federanschlußauge 11a für die Rückzugfeder 15 und eine Zapfenbohrung 11h für den Kippzapfen 9b des Zwischenhebels 9. Außerdem hat die Linealverlängerung 11 einen Montageschlitz 11f und drei abgewinkelt vorspringende Einschaltanschläge 11d, die im eingebauten Zustand durch Rollenschlitze 10e des Schaltlineals 10 ragen und als Widerlager der Schaltanschläge 8b der Schaltnocken 8 dienen. Durch die Montageschlitze 10f und 11f sind die bereits erwähnten Querträger 17 geführt.

Das Schaltlineal 10 hat mehrere Antippnasen 10a für die Antippanschläge 8a zum Ausschalten des Antriebes sowie Antippnasen 10b, ebenfalls für die Antippanschläge 8a zum Einschalten des Antriebes. Außerdem hat das Schaltlineal 10 abgewinkelt vorstehende Abschaltanschläge 10c und Einschaltanschläge 10d für die Schaltanschläge 8c der Schaltnocken 8.

In der Situation nach Fig. 5 liegen die Einschaltanschläge 10d und 11d übereinander. Dies ist der Fall, wenn die Schaltleiste 4 heruntergedrückt und der zugehörige Stauplatz durch Absenken des Antriebsgurtes 3 abgeschaltet ist. Während der Schaltvorgänge bewegt sich stets entweder das Schaltlineal 10 oder die danebenliegende Linealverlängerung 11, so daß entweder der Einschaltanschlag 10d oder der Einschaltanschlag 11d in der Stellung ist, in der er im Drehweg des Schaltanschlages 8c oder 8b liegt und die Drehung des Schaltnockens 8 mit der mit ihm verbundenen Schaltrolle 7 stoppt.

Die Fig. 15 bis 18 zeigen die Schaltrolle 7 mit der Gurtrolle 5 und den Schaltnocken 8. Die Schaltrolle 7 hat zwei zungenförmige Mantelsegmente 7a und eine zur Außenfläche der Mantelsegmente 7a konzentrische Bohrung 7e für die Achse 19 und einen dazu exzentrischen Lagerring 7f für das die Gurtrolle 5 tragende Lager 6. Die Gurtrolle 5 durchdringt das Mantelsegment 7a im Bereich einer Durchdringung 7b. Die Schaltrolle 7 hat gegenüber der Durchdringung 7b eine Aussparung 7c, durch den die Gurtrolle 5 ebenfalls ragt. Die zungenförmigen Mantelsegmente 7a werden gebildet durch die zur Bohrung 7e konzentrischen Außenflächen und durch die exzentrisch dazu gelagerte Gurtrolle 5. Die Außenflächen der Mantelsegmente 7a gelangen in den Bereich des Antriebsgurtes 3, wenn die Schaltrolle 7 über den Antippanschlag 8a des am Topfboden 7d angebrachten Schaltnockens 8 etwas gedreht wurde.

Im Winkel von ungefähr 90° zum Antippanschlag 8a hat der Schaltnocken 8 zwei Schaltanschläge 8b und 8c und zwischen diesen einen Absatz 8d, der berücksichtigt, daß die Einschaltanschläge 10d und 11d ungleich weit vorstehen, wie in Fig. 14 zu erkennen ist.

Die Fig. 19 und 20 zeigen die Lage der Schaltrolle 7 mit der Gurtrolle 5 beim abgesenkten Antriebsgurt 3 sowie die Lage des Schaltnockens 8 mit seinem Schaltanschlag 8c am Abschaltanschlag 10c des Schaltlineals 10.

Die Fig. 21 und 22 zeigen die Schaltrolle 7 mit der Gurtrolle 5 in Antriebsstellung für den Antriebsgurt 3, der die Tragrollen 2 teilweise umschlingt. Der Schaltanschlag 8b liegt am Einschaltanschlag 11d an und hält damit die Schaltrolle 7 in der gezeichneten Lage. Wenn nun zum Schalten entweder das Schaltlineal 10 nach Fig. 22 in Pfeilrichtung nach links oder nach Fig. 20 nach rechts verschoben wird, schlägt die Antippnase 10a gegen den Antippanschlag 8a und bewirkt eine leichte Verdrehung der Schaltrolle 7.

Dies ist möglich, weil dann der Schaltanschlag 8b am kurzen Einschaltanschlag 11d und der Schaltanschlag 8c am längeren Einschaltanschlag 10d vorbeidrehen kann. Beim leichten Verdrehen gelangt das Mantelsegment 7a in den Bereich des Antriebsgurtes 3, der aufgrund des Reibwiderstandes die Schaltrolle 7 um 180° in die andere Lage dreht. So wird die Zugkraft des Antriebsgurtes ausgenutzt, um mit einem geringen Schaltimpuls eine große zum Schalten erforderliche Kraft zu erhalten.

Die durch den Antriebsgurt erzeugte Schaltkraft ermöglicht auch die Anbringung eines Bremskeils 20, der keilförmig zwischen zwei nebeneinander angeordnete Tragrollen gepreßt wird, wie Fig 1 und 25 zeigen. Für die Anbringung dieses Bremskeils 20 hat die Schaltrolle 7 eine formschlüssige Mitnahme 7g, für einen Exzenterzapfen 21, der dem Exzenterzapfen-Lagerring 7f gegenüberliegt und den Bremskeil 20 in der unteren Stellung nach Fig. 19 freigibt.

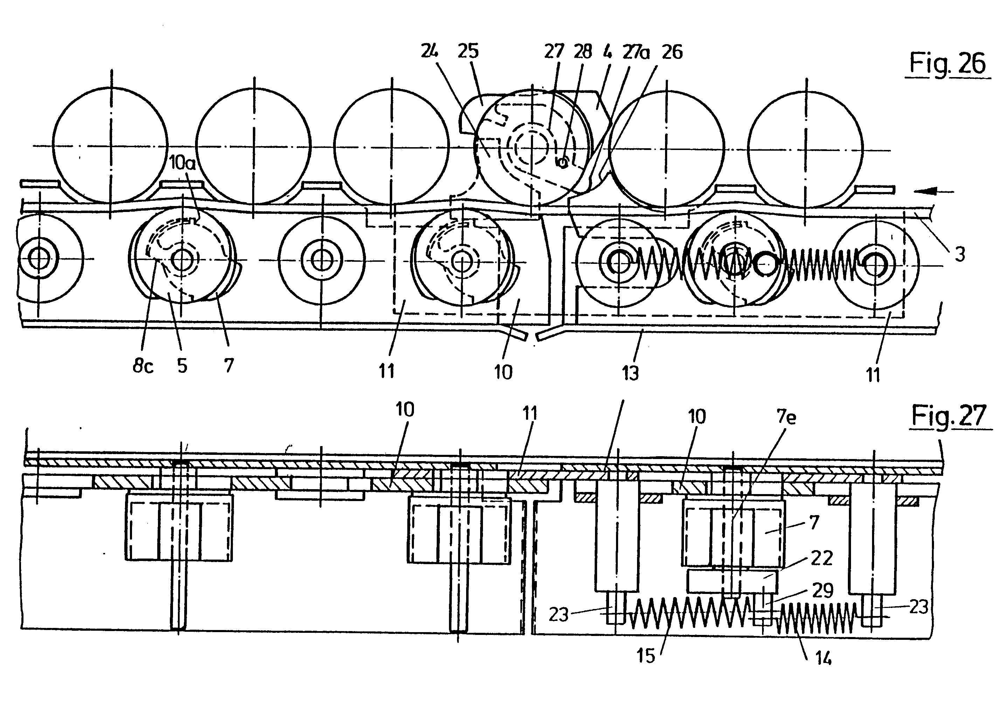

Beim Ausführungsbeispiel nach den Fig. 26 und 27 stimmen die Anschläge in den Schaltlinealen 10 sowie die sich darin drehenden Schaltrollen 7 mit ihren Schaltnocken 8 und Gurtrollen 5 mit den bereits beschriebenen überein. An jedem Stauplatz hat jedoch eine Schaltrolle 7 an einer Scheibe 22 einen exzentrischen Federzapfen 29, der je nach Stellung der Schaltrolle 7 vor oder hinter deren Bohrung 7e liegt. An diesen Federzapfen 29 greift die bereits erwähnte Ausgleichfeder 14 sowie die Rückzugfeder 15 an. Beide Federn haben ihr Widerlager in Haltezapfen 23, die in einer Linealverlängerung 11 des Schaltlineals 10 befestigt sind. Auch diese Federn beeinflussen sich beim Schalten gegenseitig, wie bereits beschrieben.

Jede Linealverlängerung 11 überdeckt das anschließende Schaltlineal 10 etwas und trägt eine Sperrnase 24, hinter die beim nicht gestauten Stauplatz ein Riegelfinger 25 der Schaltleiste 4 greift. Neben diesem hat das anschließende Schaltlineal 10 eine Gleitkurve 26 für eine Gleitnase 27a einer Schaltfeder 27, die die Achse der Schaltleiste im Winkel von etwa 270° umschlingt und mit einer Öse an einem Federzapfen 28 der Schaltleiste 4 verbunden ist.

Nach dem Drehen der von dem Antriebsgurt 3 stets beaufschlagten Schaltrolle 7 um 180° gelangt der exzentrische Federzapfen 29 um die im Elemententräger 13 befestigte Achse der Schaltrolle 7 nach links. Dabei wird die Ausgleichfeder 14 gespannt und die Rückzugfeder 15 entspannt.

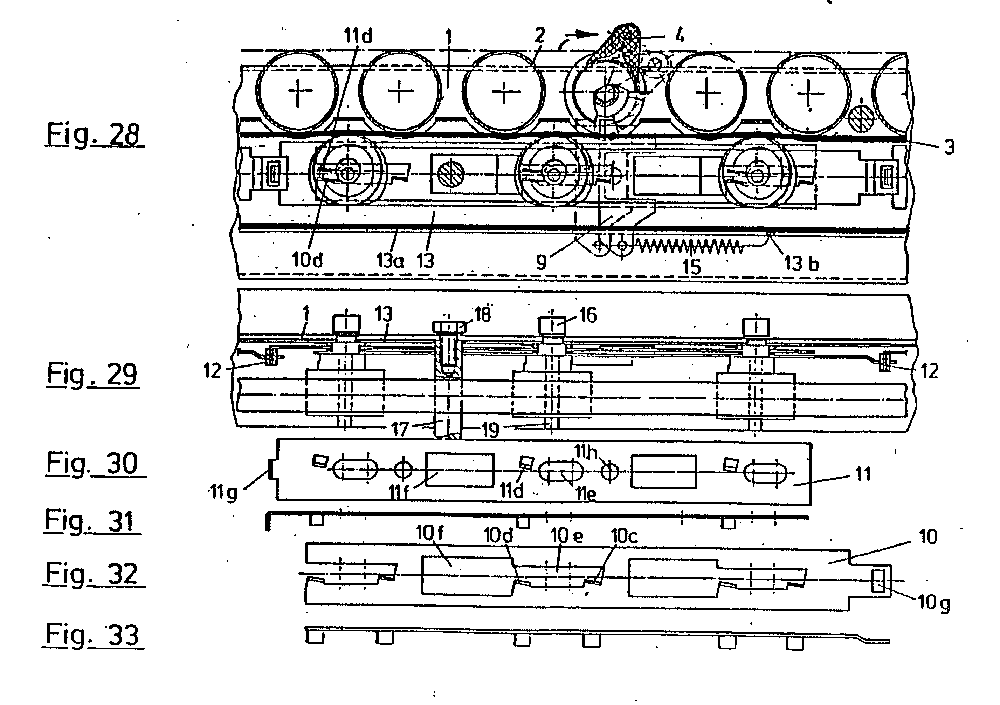

Beim Ausführungsbeispiel nach den Fig. 28 bis 47 entfällt die Ausgleichsfeder 14. Stattdessen erhält die Schaltrolle 7 eine Antippfeder 32, die Umschaltungen in beiden Richtungen einleitet. Der pendelnd gelagerte Zwischenhebel 9 ist als Zwischenstück 9 ausgebildet, das zusammen mit der Linealverlängerung 11 vor- und rückwärts verschoben wird.

Auch entfallen Antippanschlag 8a, Antippnasen 10a und 10b sowie das Federanschlußauge 11a aus dem Ausführungsbeispiel nach den Fig. 1 bis 25.

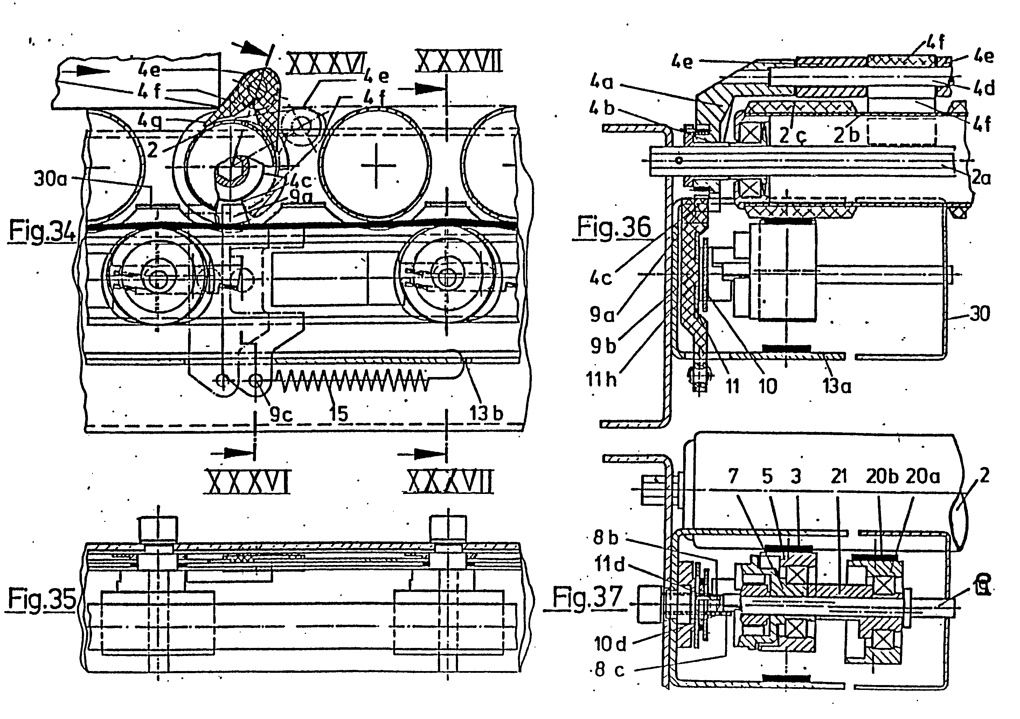

Die Fig. 28 zeigt einen Ausschnitt aus einer anderen Förderbahn, und die Fig. 29 zeigt einen Längsschnitt durch die Seitenwange mit den Schaltelementen in der Draufsicht. Vergrößerungen aus den Fig. 28 und 29 sowie Querschnitte dadurch sind in den Fig. 34 bis 37 dargestellt. Bei diesem Ausführungsbeispiel werden die Schaltlineale immer um einen vollen Hub verschoben.

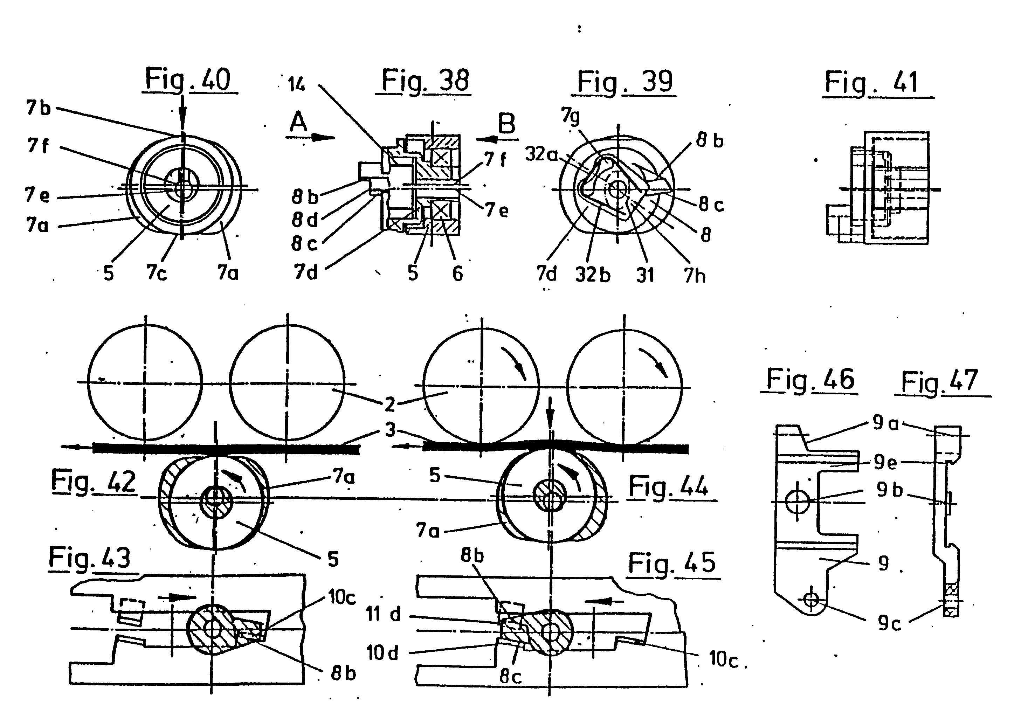

Zwischen den Seitenwangen 1 sind Tragrollen 2 gelagert, von denen an jedem Stauplatz eine mit einer Schaltleiste 4 versehen ist. Die Schaltleiste 4 wird von einem zweiarmiger Hebel 4a getragen und ist mit einer Bohrung 4b auf der Achse 2a der Tragrolle 2 gelagert und hat auf dem der Leiste gegenüberliegenden Ende eine Schaltkurve 4c (s. Fig. 34) für einen Gleitzapfen 9a eines Zwischenstückes 9, das in den Fig. 46 und 47 besonders gezeichnet ist und mit einem Zapfen 9b in einer Zapfenbohrung 11h einer Linealverlängerung 11 gelagert ist (s. Fig. 30). Das Zwischenstück 9 hat am unteren Ende eine Einhängebohrung 9c für die Rückzugfeder 15 und eine Führungsschiene 9e, zum Anliegen an der Linealverlängerung 11. Die Schaltleiste 4 hat eine über die ganze Breite der Staurollenbahn reichende Achse 4d mit abwechselnd harten Rollenelementen 4e und weichen Dämpfungselementen 4f, die mit ihren Stützlippen 4g an der Tragrolle 2 anliegen.

Ein Elemententräger 13 ist, wie die Fig. 29 zeigt, mit Zylinderschrauben 16 an der Seitenwange 1 befestigt und trägt Achsen 19 für die Schaltrollen 7. Die Seitenwangen 1 einer Förderbahn sind über zwischen diesen angeordnete Querträger 17 und Schrauben 18 miteinander verbunden. Der Elemententräger 13 ist ein U-Profil und hat im unteren waagerechten Schenkel 13a Federanschlußbohrungen 13b für die Rückzugfeder 15. Der Schenkel 13a dient ferner als gleitende Auflage für den Untertrum des Antriebsgurtes 3, wie Fig. 36 zeigt.

Fig. 36 zeigt auch die Abdeckung des Antriebsgurtes 3 und der Schaltrollen 7 durch ein Winkelprofil 30, dessen oberer Flansch 30a abschnittsweise zwischen den Tragrollen 2 liegt (s. Fig. 34).

Die in Fig. 30 gezeichnete Linealverlängerung 11 ist mit einem Rollenschlitz 11e, und das in Fig. 32 gezeichnete Schaltlineal 10 ist mit einem Rollenschlitz 10e auf der Achse 19 geführt, wie in den Fig. 29 und 37 zu sehen ist. Das Schaltlineal hat an einem Ende eine Abkröpfung mit einem Anschlußschlitz 10g für einen Anschlußwinkel 11g der Linealverlängerung 11. Die Verbindung ist durch einen über den Anschlußwinkel 11g geschobenen Klemmnoppen 12 gesichert.

Die Linealverlängerung hat außerdem eine Zapfenbohrung 11h für den Zapfen 9b des Zwischenstückes 9. Außerdem hat die Linealverlängerung 11 einen Montageschlitz 11f und abgewinkelt vorspringende Einschaltanschläge 11d, die im eingebauten Zustand durch die Rollenschlitze 10e des Schaltlineals 10 ragen und als Widerlager der Schaltanschläge 8b der Schaltnocken 8 dienen. Durch die Montageschlitze 10f und 11f sind die bereits erwähnten Querträger 17 geführt.

Das Schaltlineal 10 hat abgewinkelt vorstehende Abschaltanschläge 10c und Einschaltanschläge 10d für die Schaltanschläge 8c der Schaltnocken 8.

In der Situation nach Fig. 28 liegen die Einschaltanschläge 10d und 11d übereinander. Dies ist der Fall, wenn die Schaltleiste 4 heruntergedrückt und der zugehörige Stauplatz durch Absenken des Antriebsgurtes 3 abgeschaltet ist. Während der Schaltvorgänge bewegt sich stets entweder das Schaltlineal 10 oder die danebenliegende Linealverlängerung 11, so daß entweder der Einschaltanschlag 10d oder der Einschaltanschlag 11d in der Stellung ist, in der er im Drehweg des Schaltanschlages 8c oder 8b liegt und die Drehung des Schaltnockens 8 mit der mit ihm verbundenen Schaltrolle 7 stoppt.

Die Fig. 38 bis 41 zeigen die Schaltrolle 7 mit der Gurtrolle 5 und den Schaltnocken 8. Die Schaltrolle 7 hat zwei zungenförmige Mantelsegmente 7a und eine zur Außenfläche der Mantelsegmente 7a konzentrische Bohrung 7e für die Achse 19 und einen dazu exzentrischen Lagerring 7f für das die Gurtrolle 5 tragende Lager 6. Die Gurtrolle 5 ragt im Bereich einer Durchdringung 7b durch das Mantelsegment 7a. Die Schaltrolle 7 hat gegenüber der Durchdringung 7b eine Aussparung 7c, durch den die Gurtrolle 5 ebenfalls ragt. Die zungenförmigen Mantelsegmente 7a werden gebildet durch die zur Bohrung 7e konzentrischen Außenflächen und durch die exzentrisch dazu gelagerte Gurtrolle 5. Die Außenflächen der Mantelsegmente 7a gelangen in den Bereich des Antriebsgurtes 3, wenn die Schaltrolle 7 etwas gedreht wurde.

Der Abstand zwischen der Mitte des exentrischen Lagerringes 7f und der Mitte der Bohrung 7e für die Achse 19 gibt einen Hilfsimpuls zum Absenken des Antriebsgurtes 3.

Die Schaltrolle 7 hat von der offenen Seite her eine Ausnehmung 7h mit einem da hineinragenden Federhalter 7g, wie Fig. 39 zeigt. Zwischen Federhalter 7g und der Ausnehmung 7h liegt ein Mittelsteg 32a einer U-förmigen Antippfeder 32. Die Schenkel 32b der Antippfeder 32 liegen an einem Federnocken 31 an und üben über den Federhalter 7g stets ein Drehmoment auf die Schaltrolle 7, die dadurch ein Antippmoment erhält, das die Schaltrolle 7 bis zur Mitnahme durch den Antriebsgurt 3 über die Mantelsegmente dreht. Der Federnocken 31 ist auf der Achse 19 unverdrehbar befestigt und hat eine ovale Form. Der Schaltnocken 8 hat zwei Schaltanschläge 8b und 8c und zwischen diesen einen Absatz 8d, der berücksichtigt, daß die Einschaltanschläge 10d und 11d ungleich weit vorstehen, wie in Fig. 37 zu erkennen ist.

Die Fig. 42 und 43 zeigen die Lage der Schaltrolle 7 mit der Gurtrolle 5 beim abgesenkten Antriebsgurt 3 sowie die Lage des Schaltnockens 8 mit seinem Schaltanschlag 8b am Abschaltanschlag 10c des Schaltlineals 10.

Die Fig. 44 und 45 zeigen die Schaltrolle 7 mit der Gurtrolle 5 in Antriebsstellung für den Antriebsgurt 3, der die Tragrollen 2 teilweise umschlingt. Der Schaltanschlag 8c liegt am Einschaltanschlag 10d an und hält damit die Schaltrolle 7 in der gezeichneten Lage. Wenn nun zum Schalten entweder das Schaltlineal 10 nach Fig. 45 in Pfeilrichtung nach links oder nach Fig. 43 nach rechts verschoben wird, bewirkt die Antippfeder 32 eine leichte Verdrehung der Schaltrolle 7. Dies ist möglich, weil dann der Schaltanschlag 8b am kurzen Einschaltanschlag 11d und der Schaltanschlag 8c am längeren Einschaltanschlag 10d vorbeidrehen kann. Beim leichten Verdrehen gelangt das Mantelsegment 7a in den Bereich des Antriebsgurtes 3, der aufgrund des Reibwiderstandes die Schaltrolle 7 um 180° in die andere Lage dreht. So wird die Zugkraft des Antriebsgurtes ausgenutzt, um mit einem geringen Schaltimpuls eine große zum Schalten erforderliche Kraft zu erhalten.

Die durch den Antriebsgurt erzeugte Schaltkraft ermöglicht auch die Anbringung einer Bremsrolle 20a nach Fig. 37, die zwischen zwei nebeneinander angeordnete Tragrollen 2 angehoben wird und dabei einen in der Länge festgelegten Bremsgurt 20b gegen die Tragrollen 2 drückt und diese bremst. Für die Anbringung dieser Bremsrolle 20a hat die Schaltrolle 7 einen Exenterzapfen 21, der dem Exenterzapfen-Lagerring 7f gegenüberliegt und die Bremsrolle 20a hebt und senkt.

Bezeichnungsliste

| | |
|---|---|
| 1 | Seitenwange |
| 2 | Tragrolle |
| 3 | Antriebsgurt |
| 4 | Schaltleiste |
| 4a | Hebel |
| 4b | Bohrung |
| 4c | Schaltkurve |
| 4d | Achse |
| 4e | Rollelement |
| 4f | Dämpfungselement |
| 4g | Stützlippe |
| 5 | Gurtrolle |
| 6 | Lager |
| 7 | Schaltrolle |
| 7a | Mantelsegment |
| 7b | Durchdringung |
| 7c | Aussparung |
| 7d | Topfboden |
| 7e | Bohrung |
| 7f | exzentrischer Lagerring |
| 7g | Federhalter |
| 7h | Ausnehmung |
| 8 | Schaltnocken |
| 8a | Antippanschlag |
| 8b | Schaltanschlag |
| 8c | Schaltanschlag |
| 8d | Absatz |
| 9 | Zwischenstück |
| 9a | Gleitzapfen |
| 9b | Kippzapfen |
| 9c | Einhängebohrung |
| 9d | Abdrückfläche |
| 9e | Führungsschiene |
| 10 | Schaltlineal |
| 10a | Antippnase aus |
| 10b | Antippnase ein |
| 10c | Abschaltanschlag |
| 10d | Einschaltanschlag |
| 10e | Rollenschlitz |
| 10f | Ausnahmebereich |
| 10g | Anschlußschlitz |
| 10i | Montageschlitz |
| 11 | Linealverlängerung |
| 11a | Federnschlußauge |
| 11d | Einschaltanschlag |
| 11e | Rollenschlitz |
| 11f | Montageschlitz |
| 11g | Anschlußwinkel |
| 11h | Zapfenbohrung |
| 12 | Klemmnoppen |
| 13 | Elemententräger |
| 13a | waagerechter Schenkel |
| 13b | Federanschlußbohrung |
| 13c | Anschlag |
| 13d | Aufgleitnase |
| 14 | Ausgleichfeder |
| 15 | Rückzugfeder |
| 16 | Senkschraube |
| 17 | Querträger |
| 18 | Schraube |
| 19 | Achsen |
| 20a | Bremsrolle |
| 20b | Bremsgurt |
| 21 | Exzenterzapfen |
| 22 | Scheibe |
| 23 | Haltezapfen |
| 24 | Sperrnase |
| 25 | Riegelfinger |
| 26 | Gleitkurve |
| 27 | Schaltfeder |
| 27a | Gleitnase |
| 28 | Federzapfen |
| 29 | exzentrischer Federzapfen |
| 30 | Winkelprofil |
| 31 | Federnocken |
| 32 | Antippfeder |
| 32a | Mittelsteg |
| 32b | Schenkel |

**Patentansprüche**

1. Staurollenbahn mit Tragrollen (2) und in den Förderweg hineinbewegbaren Schaltleisten (4) zum Lösen eines über heb- und senkbare Gurtrollen (5) geführten Antriebsgurtes (3) von den Tragrollen (2), wobei jede Gurtrolle (5) drehbar auf einem Lagerring (7f) in einer topfförmigen Schaltrolle (7) ungleicher Manteldicke gelagert ist, deren Mantel mit einer Aussparung (7c) und einer Durchdringung (7b) zum Durchlassen der Gurtrolle (5) versehen ist, wobei die Drehung der mit Schaltnocken versehenen Schaltrolle (7) von einem axial verschiebbaren, mit Steueranschlägen versehenen Schaltlineal (10) gesteuert wird, das von einem Kraftspeicher (14, 15) verschiebbar und mit der Schaltleiste (4) verbunden ist, dadurch gekennzeichnet, daß die Gurtrolle (5) so exzentrisch in der Schaltrolle (7) gelagert ist daß sie aus deren Mantel wegen der exzentrischen Lagerung in der Durchdringung (7b) zum wirksamen Antrieb zur Berührung zwischen den Tragrollen (2) und dem Antriebsgurt (3) hervortritt, und daß die Schaltrolle (7) auf der der Durchdringung (7b) gegenüberliegenden dicken Mantelseite die Aussparung (7c) zum Durchlassen der Gurtrolle (5) beim nicht antreibenden Antriebsgurt (3) wegen eines Abstandes zwischen den Tragrollen

9

(2) und dem Antriebsgurt (3) hat, und daß die Schaltlineale (10) sich über zwei aneinander anschließende Stauplätze (A, B; C, D) erstrecken, so daß jedes Schaltlineal (10) eine mit der Schaltleiste (4) verbundene Verlängerung (11) in Richtung der Bewegung der Fördergüter aufweist, wobei in jedem Stauplatz, in welchem die Verlängerung (11) eines Schaltlineals ein anderes Schaltlineal selbst überlappt, der Schaltnocken (8) der Schaltrolle mittels eines ersten Anschlags (8b) mit einem Steueranschlag (11d) der Verlängerung und mittels anderer Anschläge (8a, 8c) mit Steueranschlägen des anderen Schaltlineals selbst zusammenarbeiten kann.

2. Staurollenbahn nach Anspruch 1,
dadurch gekennzeichnet,
daß die Schaltrolle (7) eine konzentrische Bohrung (7e) für eine Achse (19) und einen exzentrischen Lagerring (7f) und eine dazu konzentrische Bohrung für die Gurtrolle (5) hat, die mit einem Umfangswinkel von ca. 35 Grad durch die Durchdringung (7b) und die Aussparung (7c) ragt, und daß das Mantelsegment (7a) am Übergang zur Aussparung (7c) der Schaltrolle (7) abgerundet ist.

3. Staurollenbahn nach Anspruch 1,
dadurch gekennzeichnet,
daß das Schaltlineal (10) am Anschlußende für die Linealverlängerung (11) eine Abkröpfung mit einem Anschlußschlitz (10g) als Durchlaß für einen Anschlußwinkel (11g) der Linealverlängerung (11) hat.

4. Staurollenbahn nach Anspruch 3,
dadurch gekennzeichnet,
daß das Schaltlineal (10) und die Linealverlängerung (11) mit den durch Rollenschlitze (10e, 11e) geführten Achsen (19) an einem an einer Seitenwange (1) befestigten Elemententräger (13) geführt sind und oberhalb und unterhalb der Rollenschlitze (10e) zur Verschieberichtung gerichtete Antippnasen (10a, 10b) für Antippanschläge (8a) der Schaltnocken (8) sowie in Verlängerung der Rollenschlitze (10e, 11e) etwa senkrecht zu diesen angeordnete Abschaltanschläge (10c) sowie Einschaltanschläge (10d, 11d) für Schaltanschläge (8c, 8b) der Schaltnocken (8) haben und daß das Schaltlineal (10) und die Linealverlängerung (11) Montageschlitze (10f, 11f) für die Seitenwangen (1) verbindende Querträger (17) haben.

5. Staurollenbahn nach Ansprüchen 2 und 4,
dadurch gekennzeichnet,
daß die Achsen (19) in dem an der Seitenwange (1) befestigten Elemententräger (13) gelagert sind.

6. Staurollenbahn nach Anspruch 4,
dadurch gekennzeichnet,
daß die Schaltleiste (4) über einen zweiarmigen Hebel (4a) mit einer Bohrung (4b) auf der Achse (2a) der Tragrolle (2) gelagert ist und über eine Längenausgleichverbindung (Schaltkurve 4c, Gleitzapfen 9a) mit einem Zwischenhebel (9) verbunden ist, der mit einem Kippzapfen (9b) in einer Zapfenbohrung (11h) der Linealverlängerung (11) gelagert ist und unterhalb des Kippzapfens (9b) eine Einhängebohrung (9c) für eine Ausgleichfeder (14) des Kraftspeichers hat, die als Zugfeder ausgebildet und in Förderrichtung vor der Schaltleiste (4) in einer Federanschlußbohrung (13b) im waagerechten Schenkel (13a) des Elemententrägers (13) eingehängt ist und daß der Ausgleichfeder (14) eine Rückzugfeder (15) des Kraftspeichers entgegen gerichtet ist, die zwischen einem Federanschlußauge (11a) der Linealverlängerung (11) und einer weiteren Federanschlußbohrung (13b) des Elemententrägers (13) angeordnet ist.

7. Staurollenbahn nach Anspruch 2,
dadurch gekennzeichnet,
daß an einer oder mehreren der Schaltrollen (7) gegenüber dem exzentrischen Lagerring (7f) ein Exzenterzapfen (21) für eine Bremse vorhanden ist.

8. Staurollenbahn nach Anspruch 1,
dadurch gekennzeichnet,
daß die Verlängerung (11) des Schaltlineals (10) an seinem in Förderrichtung liegenden Ende eine Sperrnase (24) für einen dahintergreifenden Riegelfinger (25) der in die Förderbahn vorstehenden Schaltleiste (4) hat, die von einer Schaltfeder (27) in den Förderweg beaufschlagt ist, wobei sich die Schaltfeder (27) mit einer Gleitnase (27a) auf einer in Förderrichtung ansteigenden Gleitkurve (26) des in Förderrichtung anschließenden Schaltlineals (10) bzw. der Linealverlängerung (11) abstützt, wobei die Schaltfeder (27) eine Blattfeder ist, die die Drehachse der Schaltleiste (4) in einem Winkel von ca. 270° umschließt und an einem Federzapfen (28) des Schaltlineals (4) mittels einer angebogenen Öse angeordnet ist.

9. Staurollenbahn nach Anspruch 6,
dadurch gekennzeichnet,
daß die Ausgleichfeder (14) und Rückzugfeder (15) einerseits über Haltezapfen (23) mit der Linealverlängerung (11) verbunden sind und andererseits an einem exzentrischen Federzapfen (29) der am Elemententräger (13) gelagerten Schaltrolle (7) angreifen.

10. Staurollenbahn nach Anspruch 1,
dadurch gekennzeichnet,
daß die von dem Antriebsgurt (3) drehbare Schaltrolle (7) eine Ausnehmung (7h) mit einem Federhalter (7g) für eine Antippfeder (32) hat, die sich an einem auf der Achse (19) der Schaltrolle (7) befestigten Federnocken (31) in Drehrichtung für die Schaltrolle (7) abstützt, deren Schaltnocken (8) an einem der Schaltanschläge (8c, 8d) des Schaltlineals (10) anliegt.

11. Staurollenbahn nach Anspruch 10,
dadurch gekennzeichnet,
daß die Antippfeder (32) eine etwa U-förmig gebogene Blattfeder ist, deren Mittelsteg (32a) zwischen dem Federhalter (7a) und der Ausnehmung (7h) gehalten ist und die mit ihren Schenkeln (32b) unter Vorspannung an dem Federnocken (31) anliegt, und daß die Ausnehmung (7h) mindestens so breit ist, wie der Federnocken (31) zuzüglich der Dicke der Schenkel (32b) der Antippfeder (32).

12. Staurollenbahn nach Anspruch 10,
dadurch gekennzeichnet,
daß der exzentrische Lagerring (7f) der Schaltrolle (7) bei gehobener Gurtrolle (5) in Zugrichtung des Antriebsgurtes (3) hinter der Bohrung (7e) der Schaltrolle (7) für deren Achse (19) liegt.

13. Staurollenbahn nach Anspruch 9,
dadurch gekennzeichnet,
daß die Rückzugfeder (15) über eine Einhängebohrung (9c) eines Zwischenstückes (9) mit dem Schaltlineal (10) verbunden ist, und daß das Zwischenstück (9) einen Gleitzapfen (9a) hat, an dem eine Schaltkurve (4c) des Hebels (4a) der Schaltleiste (4) anliegt.

14. Staurollenbahn nach Anspruch 13,
dadurch gekennzeichnet,
daß die Schaltleiste (4) eine über die Breite der Förderbahn reichende Achse (4d) für darauf abwechselnd angeordnete Rollelemente (4e) und Dämpfungselemente (4f) hat, wobei die Rollelemente (4e) bei in Überfahrt verschwenkter Schaltleiste (4) über die Dämpfungselemente (4f) hinausragen.

15. Staurollenbahn nach Anspruch 14,
dadurch gekennzeichnet,
daß die auf der Achse (4d) pendelnd gelagerten Dämpfungselemente (4f) dem Mantel der Tragrolle (2) angepaßte Stützlippen (4g) haben.

16. Staurollenbahn nach Anspruch 10,
dadurch gekennzeichnet,
daß auf den Achsen (19) einer oder mehrerer Schaltrollen (7) gegenüber dessen exzentrischem Lagerring (7f) ein Exzenterzapfen (21) für eine Rolle (20a) vorhanden ist, die in angehobenem Zustand einen in seiner Längsrichtung festgelegten Bremsgurt (20b) von unten gegen die versetzt darüber liegenden Tragrollen (2) drückt.

## Claims

1. Stowing roller conveyor with carrying rollers (2) and switching bars (4) which can be moved into the conveying path to detach from the carrying rollers (2) a drive belt (3) carried by belt rollers (5) which can be raised and lowered, each belt roller (5) being mounted so as to rotate on a ring bearing (7f) in a cup-shaped switching roller (7) of unequal casing thickness, the casing of which is provided with a depression (7c) and a through-hole (7b) for accepting the belt roller (5), the rotation of the switching roller (7) provided with trip cams being controlled by an axially movable switching guide (10) provided with control stops, which is connected to the switching bar (4) and can be moved by an energy accumulator (14, 15),

characterised in that
the belt roller (5) is mounted eccentrically in the switching roller (7) so that because of the eccentric mounting it emerges in the through-hole (7b) from the casing of the latter to produce a contact effectively between the carrying rollers (2) and the drive belt (3), and that the switching roller (7) on the thick casing side opposite the through-hole (7b) has a depression (7c) for admitting the belt roller (5) with the drive belt (3) which is not driving because of a gap between the carrying rollers (2) and the drive belt (3), and that the switching guides (10) extend over two adjacent stowing positions (A, B; C, D) so that each switching guide (10) has an extension (11) in the direction of movement of the material conveyed connected to the switching bar (4), in each stowing position in which the extension (11) of a switching guide itself overlaps another switching guide, the trip cams (8) of the switching roller can itself operate in combination by means of a first stop (8b) with a control stop (11d) of the extension and by means of other stops (8a, 8c) can the extension and by means of other stops (8a, 8c) can operate in combination with control stops of the other switching guide.

2. Stowing roller conveyor according to Claim 1,
characterised in that
the switching roller (7) has a concentric borehole (7e) for an axle (19) and an eccentric ring bearing (7f), and a borehole concentric to it for the belt roller (5), which protrudes at an angle at circumference of approx. 35 degrees through the through-hole (7b) and the depression (7c), and that the casing segment (7a) at the transition to the depression (7c) of the switching roller (7) is rounded off.

3. Stowing roller conveyor according to Claim 1,
characterised in that
the switching guide (10) has on the connection end for the guide extension (11) an offset part with a connection slot (10g) as an opening for an angle cleat (11g) of the guide elongation (11).

4. Stowing roller conveyor according to Claim 3,
characterised in that
the switching guide (10) and the guide elongation (11) are held on an element support (13) attached to a side wall (1) by the axles (19) held in roller slots (10e, 11e), and above and below the roller slots (10e) touching tappets (10a, 10b) for touching stops (8a) of the trip cams (8) directed towards the direction of movement and in extension of the roller slots (10e, 11e) have disengaging stops (10c) and engaging stops (10d, 11d) for switching stops (8c, 8b) of the trip cams (8) arranged approximately vertical to said slots, and that the switching guide (10) and the guide extension (11) have assembly slots (10f, 11f) for the cross pieces (17) connecting the side walls (1).

5. Stowing roller conveyor according to Claims 2 and 4, characterised in that

the axles (19) are mounted in the element support (13) attached to the side wall (1).

6. Stowing roller conveyor according to Claim 4,

characterised in that

the switching bar (4) is mounted on the axle (2a) of the carrying roller (2) by a two-armed lever (4a) with a borehole (4b) and is connected to an intermediate lever (9) via a length compensation connection (switching curve 4c, sliding pivot 9a),which lever is mounted by a trunnion (9b) in a trunnion borehole (11h) of the guide extension (11), and beneath the trunnion (9b) a suspension hole (9c) for a compensating spring (14) of the energy accumulator which is in the form of a tension spring and is suspended in the direction of delivery in front of the switching bar (4) in a spring connection hole (13b) in the horizontal arm (13a) of the element support (13), and that the compensating spring (14) acts in the opposite direction to a return spring (15) of the power accumulator which is positioned between a spring connection eyelet (11a) of the guide extension (11) and a further spring connection hole (13b) of the element support (13).

7. Stowing roller conveyor according to Claim 2,

characterised in that

on one or more of the switching rollers (7) opposite the eccentric ring bearing (7f) there is an eccentric pin (21) for a brake.

8. Stowing roller conveyor according to Claim 1,

characterised in that

the extension (11) of the switching guide (10) has on its end lying in the direction of delivery a blocking projection (24) for a catch finger (25) engaging behind it of the switching bar (4) in the conveyor, which projection is acted on by a switching spring (27) in the conveying path, the switching spring (27) being supported with a sliding projection (27a) on a sliding curve (26), increasing in height in the direction of delivery, of the guide extension (11) or switching guide (10) connected in the direction of supply, the switching spring (27) being a plate spring which encloses the axis of rotation of the switching bar (4) in an angle of approx. 270° and which is positioned on a spring pivot (28) of the switching bar (4) by means of a bent eyelet.

9. Stowing roller conveyor according to Claim 6,

characterised in that

the compensating spring (14) and return spring (15) on the one hand are connected by holding pivots (23) to the guide extension (11) and on the other hand engage on an eccentric spring pivot (29) of the switching roller (7) mounted on the element support (13).

10. Stowing roller conveyor according to Claim 1,

characterised in that

the switching roller (7) which can be rotated by the drive belt (3) has a recess (7h) with a spring holder (7g) for a touching spring (32) which is supported on a spring cam (31) attached to the axle (19) of the switching roller (7) in the direction of rotation for the switching roller (7), the trip cam (8) of which lies against one of the switching stops (8c, 8d) of the switching guide (10).

11. Stowing roller conveyor according to Claim 10,

characterised in that

the touching spring (32) is a plate spring bent approximately in a U-shape, the central bar (32a) of which is held between the spring holder (7a) and the recess (7h) and which rests with its arms (32b) prestressed on the spring cam (31), and that the recess (7h) is at least as wide as the spring cam (31) plus the thickness of the arms (32b) of the touching spring (32).

12. Stowing roller conveyor according to Claim 10,

characterised in that

when the belt roller (5) is raised the eccentric ring bearing (7f) of the switching roller (7) lies in the direction of pull of the drive belt (3) behind the borehole (7e) of the switching roller (7) for its axle (19).

13. Stowing roller conveyor according to Claim 9,

characterised in that

the return spring (15) is connected via a suspension hole (9c) of an intermediate part (9) to the switching guide (10), and that the intermediate part (9) has a sliding pivot (9a) on which a switching curve (4c) of the lever (4a) of the switching bar (4) rests.

14. Stowing roller conveyor according to Claim 13,

characterised in that

the switching bar (4) has an axle (4d) extending over the width of the conveyor for roller elements (4e) and damping elements (4f) arranged alternately on it, the roller elements (4e) protruding over the damping elements (4f) when travelling over the horizontally pivoted switching bar (4).

15. Stowing roller conveyor according to Claim 14,

characterised in that

the damping elements (4f) mounted on the axle (4d) so as to swivel have supporting lips (4g) adapted to the casing of the carrying roller (2).

16. Stowing roller conveyor according to Claim 10,

characterised in that

there is an eccentric pin (21) for a roller (20a) on the axles (19) of one or more switching rollers (7) opposite their eccentric ring bearing (7f), which pin in the raised state presses a brake belt (20b) which is fixed in its longitudinal direction against the carrying rollers (2) lying staggered above it from below.

## Revendications

1. Transporteur accumulateur à rouleaux comportant des rouleaux de support (2) et des baguettes de commande (4) déplaçables dans la voie de transport pour libérer une courroie d'entraînement (3), guidée sur des galets (5) pouvant être souleves et abaissés, des rouleaux de support (2), chaque galet de courroie (5) étant monté rotatif sur une bague de palier (7f) dans un galet de commande (7) d'épaisseur d'enveloppe inégale, dont l'enveloppe est munie d'un évidement (7c) et d'un passage (7b) pour laisser passer le galet de courroie (5), la rotation du galet de commande (7) muni d'une came de commande étant commandée par une règle de commande (10) axialement mobile, munie de butées de commande, qui peut être déplacée à l'aide d'un accumulateur d'énergie (14, 15) et est reliée à la baguette de commande (4), caractérisé en ce que le galet de courroie (5) est monté excentriquement dans le galet de commande (7) de sorte qu'il fait saillie de l'enveloppe de celui-ci à cause du montage excentrique dans le passage (7b) pour l'entraînement efficace par contact entre les rouleaux de support (2) et la courroie d'entraînement (3), et en ce que le galet de commande (7), du côté d'enveloppe épais opposé au passage (7b), présente un évidement (7c) pour le passage du galet de courroie (5) lorsque la courroie d'entraînement (3) n'entraîne pas à cause d'un écartement entre les rouleaux de support (2) et la courroie d'entraînement (3), et en ce que les règles de commande (10) s'étendent sur deux emplacements d'accumulation adjacents (A, B; C, D), de sorte que chaque règle de commande (10) présente un prolongement (11) relié à la baguette de commande (4) dans la direction de déplacement des matières transportées, par quoi, dans chaque emplacement d'accumulation, dans lequel le prolongement (11) d'une règle de commande chevauche une autre règle de commande, la came de commande (8) du galet de commande peut coopérer au moyen d'une première butée (8b) avec une butée de commande (11d) du prolongement et au moyen d'autres butées (8a, 8c) avec des butées de commande de l'autre règle de commande.

2. Transporteur accumulateur à rouleaux selon la revendication 1, caractérisé en ce que le galet de commande (7) présente un alésage concentrique (7e) pour un axe (19) et une bague de palier excentrique (7f) et un alésage qui lui est concentrique pour le galet de courroie (5), qui fait saillie, sur un angle périphérique d'environ 35 degrés, dans le passage (7b) et l'évidement (7c), et en ce que le segment d'enveloppe (7a) est arrondi à la transition vers l'évidement (7c) du galet de commande (7).

3. Transporteur accumulateur à rouleaux selon la revendication 1, caractérisé en ce que la règle de commande (10) présente, à l'extrémité de raccordement pour le prolongement (11), un coude ayant une rainure de raccordement (10g) servant de passage pour un coude de raccordement (11g) du prolongement (11).

4. Transporteur accumulateur à rouleaux selon la revendication 3, caractérisé en ce que la règle de commande (10) et le prolongement (11) sont guidés par les axes (19) guidés à travers les rainures (10e, 11e) contre un support d'élément (13) fixé à une paroi latérale (1) et présentent, au-dessus et au-dessous des rainures (10e), des becs de contact (10a, 10b) orientés dans la direction de déplacement pour des butées (8a) de la came de commande (8), ainsi que des butées de mise hors service (10c) disposées dans le prolongement des rainures (10e, 11e) à peu près perpendiculairement à celles-ci, ainsi que des butées de mise en service (10d, 11d), pour des butées (8c, 8b) de la came de commande (8), et en ce que la règle de commande (10) et le prolongement (11) présentent des rainures de montage (10f, 11f) pour les traverses (17) reliant les parois latérales (1).

5. Transporteur accumulateur à rouleaux selon les revendications 2 et 4, caractérisé en ce que les axes (19) sont montés dans le support d'élément (13) fixé à la paroi latérale (1).

6. Transporteur accumulateur à rouleaux selon la revendication 4, caractérisé en ce que la baguette de commande (4) est montée, par l'intermédiaire d'un levier à deux bras (4a), grâce à un alésage (4b) sur l'axe (2a) du rouleau de support (2) et est reliée à un levier intermédiaire (9) par l'intermédiaire d'une liaison de compensation longitudinale (came de commande 4c, tourillon lisse 9a), levier qui est monté par un tourillon (9b) dans un alésage (11h) du prolongement de règle (11) et, au-dessous du tourillon (9b), comporte un alésage d'accrochage (9c) pour un ressort de compensation (14) de l'accumulateur d'énergie, qui est réalisé sous forme de ressort de traction et est suspendu dans la direction d'alimentation avant la baguette de commande (4) dans un alésage de raccordement pour ressort (13b) dans l'aile horizontale (13a) du support d'élément (13), et en ce que le ressort de compensation (14) est opposé à un ressort de rappel (15) de l'accumulateur d'énergie, qui est disposé entre un oeillet de raccordement pour ressort (11a) du prolongement de règle (11) et un autre alésage de raccordement pour ressort (13b) du support d'élément (13).

7. Transporteur accumulateur à rouleaux selon la revendication 2, caractérisé en ce que, sur un ou plusieurs des galets de commande (7), vis-à-vis de la bague de palier excentrée (7f), se trouve un tourillon excentrique (21) pour un frein.

8. Transporteur accumulateur à rouleaux selon la revendication 1, caractérisé en ce que le prolongement (11) de la règle de commande (10) présente, à son extrémité se trouvant dans la direction de transport, un bec d'arrêt (24) pour un doigt d'accrochage (25), s'engageant derrière celui-ci, de la baguette de commande (4) en saillie dans la voie d'alimentation, qui est sollicitée par un ressort (27) dans la voie d'alimentation, le ressort (27) s'appuyant par son bec (27a) sur une came (26), s'élevant dans la direction d'alimentation, de la règle de commande (10) adjacente dans la direction d'alimentation ou du prolongement de règle (11), le ressort (27) étant un ressort à lames, qui entoure l'axe de rotation de la baguette de commande (4) sur un angle d'environ 270° et est disposé sur un tourillon (28) de la règle de commande (4) au moyen d'un oeillet cintré.

9. Transporteur accumulateur à rouleaux selon la revendication 6,
caractérisé en ce que le ressort de compensation (14) et le ressort de rappel (15) sont reliés d'une part au prolongement de règle (11) par des tourillons de maintien (23) et s'engagent d'autre part sur un tourillon excentrique (29) du galet de commande (7) monté sur le support d'élément (13).

10. Transporteur accumulateur à rouleaux selon la revendication 1,
caractérisé en ce que le galet de commande (7) entraîné en rotation par la courroie d'entraînement (3) présente un évidement (7h) ayant un moyen de maintien pour ressort (7g) pour un ressort (32), qui s'appuie contre une came (31) fixée sur l'axe (19) du galet de commande (7) dans la direction de rotation pour le galet de commande (7), la came de commande (8) reposant contre une des butées de commande (8c, 8d) de la règle (10).

11. Transporteur accumulateur à rouleaux selon la revendication 10,
caractérisé en ce que le ressort (32) est un ressort à lames cintré à peu près en forme de U, dont la partie centrale (32a) est maintenue entre le moyen de retenue pour ressort (7a) et l'évidement (7h) et qui s'appuie par ses ailes (32b) sous tension contre la came (31), et en ce que l'évidement (7h) est au moins aussi large que la came (31) plus l'épaisseur des ailes (32b) du ressort (32).

12. Transporteur accumulateur à rouleaux selon la revendication 10,
caractérisé en ce que la bague de palier excentrique (7f) du galet de commande (7) se trouve, lorsque le galet de courroie (5) est soulevé, dans la direction de traction de la courroie d'entraînement (3) derrière l'alésage (7e) du galet de commande (7) pour l'axe (19).

13. Transporteur accumulateur à rouleaux selon la revendication 9,
caractérisé en ce que le ressort de rappel (15) est relié, par l'intermédiaire d'un alésage d'accrochage (9c) d'une pièce intermédiaire (9), à la règle de commande (10), et en ce que la pièce intermédiaire (9) présente un tourillon lisse (9a), contre lequel s'appuie une came de commande (4c) du levier (4a) de la baguette de commande (4).

14. Transporteur accumulateur à rouleaux selon la revendication 13,
caractérisé en ce que la baguette de commande (4) présente un axe (4d), s'étendant sur la largeur de la voie de transport, pour des éléments de galet (4e) et des éléments amortisseurs (4f) disposés alternativement sur celui-ci, les éléments de galet (4e) faisant saillie au-dessus des éléments amortisseurs (4f) lorsque la baguette de commande (4) est pivotée dans le passage.

15. Transporteur accumulateur à rouleaux selon la revendication 14,
caractérisé en ce que les éléments amortisseurs (4f) montés de façon oscillante sur l'axe (4d) présentent des lèvres d'appui (4g) adaptées à l'enveloppe du rouleau de transport (2).

16. Transporteur accumulateur à rouleaux selon la revendication 10,
caractérisé en ce que, sur les axes (19) d'un ou plusieurs galets de commande (7) vis-à-vis de leur bague de palier excentrique (7f), se trouve un tourillon excentrique (21) pour un galet (20a), qui, dans l'état soulevé, presse une courroie de freinage (20b), fixée longitudinalement, du bas contre les rouleaux de transport (2) disposés de façon décalée sur celle-ci.

Fig. 5

Fig. 6

Fig. 7

Fig. 8

Fig. 9

Fig. 10

0 175 869

Fig. 11

Fig. 12

Fig. 13

Fig. 14

XIV

XIII

30a

XIV

XIII

4a
4b
4c
9a
9a
4c

13c   9d

2a
2
30
13a

8c
8b
8
11d
10d
19

0 175 869

5

0 175 869

Fig. 15  Fig. 16  Fig. 17  Fig. 18  Fig. 19  Fig. 20  Fig. 21  Fig. 22  Fig. 23  Fig. 24  Fig. 25

Fig. 26

Fig. 27

0 175 869

Fig. 28

Fig. 29

Fig. 30

Fig. 31

Fig. 32

Fig. 33

0 175 869

Fig.34

Fig.35

Fig.36

Fig.37

Fig. 40

Fig. 38

Fig. 39

Fig. 41

Fig. 42

Fig. 44

Fig. 43

Fig. 45

Fig. 46

Fig. 47

0175 869